# EUROPÄISCHE PATENTSCHRIFT

(11) **EP 1 615 963 B1**
(45) Veröffentlichungstag und Bekanntmachung des Hinweises auf die Patenterteilung: **31.12.2008**
(21) Anmeldenummer: 04723583.3
(22) Anmeldetag: 26.03.2004
(51) Int. Cl.: C08G 12/32, C08G 73/06

(54) **VERFAHREN ZUR KONTINUIERLICHEN SYNTHESE EINES MELAMINFLÜSSIGHARZES**
METHOD FOR THE CONTINUOUS SYNTHESIS OF A LIQUID MELAMINE RESIN
PROCEDE DE SYNTHESE D'UNE RESINE LIQUIDE DE MELAMINE EN CONTINU

(30) Priorität: 16.04.2003 DE 10318481
(43) Veröffentlichungstag der Anmeldung: 18.01.2006
(73) Patentinhaber: AMI Agrolinz Melamine International GmbH, 4021 Linz (AT)
(72) Erfinder: RÄTZSCH, Manfred, A-4073 Wilhering (AT); BUCKA, Hartmut, A-4622 Eggendorf (AT); SCHRÖDER, Frank, 04683 Albrechtshain (DE); PFEIFFER, Steffen, A-4030 Linz (AT); TAPPEINER, Günther, 4020 Linz (AT)
(74) Vertreter: Maikowski, Michael
(86) Internationale Anmeldenummer: PCT/EP2004/003269
(87) Internationale Veröffentlichungsnummer: WO 2004/092239

(56) Entgegenhaltungen:
- EP-A- 0 062 179
- WO-A-03/106558
- DE-A- 2 516 349

## Beschreibung

Die Erfindung betrifft ein Verfahren nach dem Oberbegriff des Anspruchs 1, eine Verwendung eines Melaminharzkondensates gemäß Anspruch 24 und Melaminerzeugnisse nach Anspruch 25.

Direktsyntheseverfahren zur Herstellung von veretherten Melaminharzkondensaten sind bekannt.

Nach DE-OS 25 16 349 und der US-A 4,425,466 lassen sich veretherte Methylolaminotriazine durch Umsetzung von Aminotriazinen mit Formaldehyd und Alkoholen in Gegenwart von starken organischen Säuren bei 80 bis 130°C herstellen. Der Einsatz von Ionenaustauschern bei der Direktherstellung veretherter Formaldehydharze wird in der BE-A 623 888 beschrieben. Diese Verfahren waren nicht durchgehend kontinuierlich aufgelegt, was aus verfahrensökonomischen Gründen eigentlich wünschenwert wäre.

Der vorliegenden Erfindung liegt die Aufgabe zugrunde, ein effizientes kontinuierliches Direktsyntheseverfahren zu schaffen.

Diese Aufgabe wird erfindungsgemäß durch ein Verfahren mit den Merkmalen des Anspruchs 1 gelöst.

Erfindungsgemäß wird
a)in einer kontinuierlichen ersten Reaktionsstufe, die inbesondere mindestens einen Rührkessel aufweist, Melamin, mindestens ein Aldehyd und mindestens ein Alkohol zugeführt und in ihr umgesetzt,
b) das Reaktionsgemisch, inbesondere eine Suspension zur Trennung in eine feststoffreiche Phase und eine feststoffarme Phase einer Fest-Flüssig-Phasentrennvorrichtung zugeführt,
c) die nach der Fest-Flüssig-Phasentrennung vorliegende feststoffreiche Phase in die erste Reaktionsstufe zurückgeführt und
d) die nach der Fest-Flüssig-Phasentrennung vorliegende feststoffarme Phase weiteren Verarbeitungsschritten zugeführt, insbesondere in eine zweite Reaktionsstufe gefördert und dort weiter umgesetzt.

Dabei ist es vorteilhaft, wenn die festsstoffreiche Phase reich an nicht gelöstem Melamin ist.

In vorteilhafter Weise wird das Reaktionsprodukt als Suspension von einem Überlauf eines Reaktors der ersten Reaktionsstufe, insbesondere des letzten Reaktors der ersten Reaktionsstufe abgezogen und in die Fest-Flüssig-Phasentrennvorrichtung gefördert.

Damit ist es möglich, diesen Teilschritt eines vollständigen Direktsyntheseverfahrens kontinuierlich zu betreiben, wobei durch den stetigen Abzug des Reaktionsproduktes und der Rückführung der feststoffreichen Phase ein gleichmäßiger Reaktionsfortschritt erreichbar ist.

Mit Vorteil ist die Fest-Flüssig-Phasentrennvorrichtung als Hydrozyklon, als Zentrifuge, insbesondere als Tellerzentrifuge oder als Filter ausgebildet.

Bevorzugt wird für die Reaktion im ersten Reaktor eine Lösung von Formaldehyd (37%-ig) in Wasser und Methanol verwendet.

Ferner ist es vorteilhaft, vor der ersten Reaktionsstufe die Reaktanten in einem kontinuierlichen Mischer homogen vorzumischen.

Vorteilhafterweise findet die Reaktion in mindestens einem ersten Reaktor bei Temperaturen zwischen 70 und 140°C und bei einem Druck zwischen 2 und 30 bar statt.

Mit Vorteil wird die feststoffarme Phase nach der Fest-Flüssig-Phasentrennvorrichtung einer kontinuierlichen zweiten Reaktionsstufe, insbesondere mit mindestens einem Rohrreaktor zur weiteren Veretherung zugeführt. Vorteilhafterweise wird die Umsetzung in der zweiten Reaktionsstufe unter sauren Bedingungen, insbesondere bei einem pH-Wert zwischen 5 und 6, durchgeführt.

Besonders vorteilhaft ist der Einsatz von heterogenen sauren Katalysatoren wie z.B. sauren Ionenaustauschern. Geeignete Ionenaustauscher sind beispielsweise Ionenaustauscher auf Basis von chlormethylierten und mit Trimethylolamin aminierten Styren- Divinylbenzen-Copolymeren oder auf Basis von sulfonierten Styren-Divinylbenzen-Copolymeren.

Auch ist es vorteilhaft, wenn dem Reaktionsgemisch vor der zweiten Reaktionsstufe homogene Katalysatoren zugemischt werden.

Für eine gute radiale Durchmischung in der zweiten Reaktionsstufe ist es vorteilhaft, wenn mindestens ein Reaktor der zweiten Reaktionsstufe Mischelemente, insbesondere statische Mischer und / oder Füllkörper aufweist.

Es ist vorteilhaft, wenn das Reaktionsprodukt der zweiten Reaktionsstufe auf einen pH-Wert von mehr als 9 eingestellt wird, insbesondere durch Zudosierung von Natronlauge.

Das Reaktionsprodukt der zweiten Reaktionsstufe wird in mindestens einem Verdampfungsschritt aufkonzentriert.

Durch vollständige Abspaltung von Formaldehyd und teilweiser Kondensation wird das praktisch lösungsmittelfreie flüssige Melaminharzvorkondensat vorteilhafterweise in einer dritten Reaktionstufe modifiziert. Die dritte Reaktionsstufe ist vorzugsweise als kontinuierlicher Mischer, insbesondere als Kneter ausgeführt.

Dabei werden dem Melaminharzvorkondensat gegebenenfalls vor, während und/oder nach dem Aufkonzentrieren C₄ -C₁₈ -Alkohole, Diole vom Typ HO-R-OH und / oder vierwertige Alkohole auf oder Basis von Erythrit zugesetzt werden und diese in der dritten Reaktionsstufe mit dem aufkonzentrierten Melaminharzvorkondensat vorzugsweise in einem Mischer, insbesondere einem Kneter umgesetzt wird.

Vorteilhafterweise ist mindestens ein Diol vom Typ HO-R-OH mit Molmassen von 62 bis 20000 oder eine Mischung von mindestens zwei Diolen vom Typ HO-R-OH mit Molmassen von 62 bis 20000 eingesetzt werden, wobei der Substituent R eine der folgendem Strukturen aufweisen kann
C₂-C₁₈-Alkylen,
-CH(CH₃)-CH₂-O-(C₂-C₁₂)-Alkylen-O-CH₂-CH(CH₃)-,
-CH(CH₃)-CH₂-O-(C₂-C₁₂)-Arylen-O-CH₂-CH(CH₃)-,
-(CH₂-CH₂-CH₂-CH₂-CH₂-CO)ₓ-(CH₂-CHR)_{y}-
-[CH₂-CH₂-O-CH₂-CH₂]ₙ-,
-[CH₂-CH(CH₃)-O-CH₂-CH(CH₃)]ₙ-,
-[O-CH₂-CH₂-CH₂-CH₂]ₙ-,
-[(CH₂)₂₋₈-O-CO-(C₆-C₁₄)-Arylen-CO-O-(CH₂)₂₋₈]ₙ-,
-[(CH₂)₂₋₈-O-CO-(C₂-C₁₂)-Alkylen-CO-O-(CH₂)₂₋₈]ₙ-,
wobei n = 1 bis 200; x= 5 bis 15; 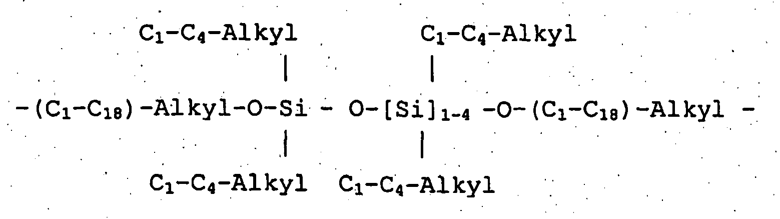
- Siloxangruppen enthaltende Polyestersequenzen des Typs

   -[(X)ᵣ-O-CO-(Y)ₛ-CO-O-(X)ᵣ]-,

   bei denen
   X=-{(CH₂)₂₋₈-O-CO-(C₆-C₁₄)-Arylen-CO-O-(CH₂)₂₋₈}-
   oder
   -{(CH₂)₂₋₈-O-CO-(C₂-C₁₂)-Alkylen-CO-O-(CH₂)₂₋₈} -; 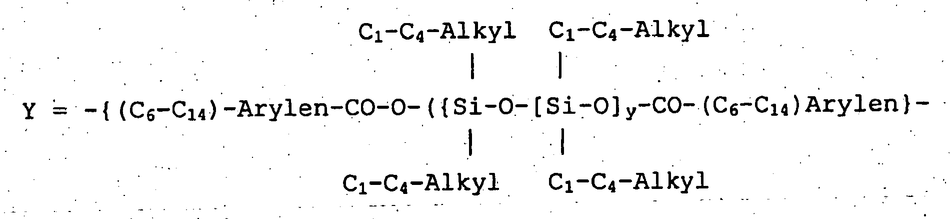 oder 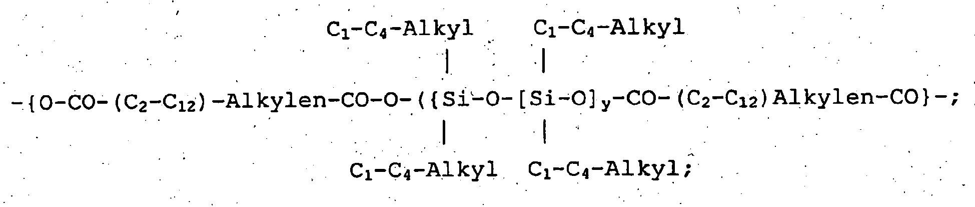 wobei r = 1 bis 70; s = 1 bis 70 und y = 3 bis 50 bedeuten;
- Siloxangruppen enthaltende Polyethersequenzen des Typs 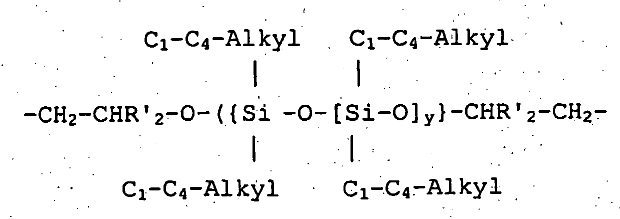 wobei R'₂ = H; C₁-C₄-Alkyl und y = 3 bis 50 bedeuten;
- Sequenzen auf Basis von Alkylenoxidaddukten des Melamins vom Typ 2-Amino-4,6-di-(C₂-C₄)alkylenamino-1,3,5-triazin-Sequenzen
- Phenolethersequenzen auf Basis zweiwertiger Phenole und C₂-C₈-Diolen vom Typ -(C₂-C₈)Alkylen-O-(C₆-C₁₈)-Arylen-O-(C₂-C₈)-Alkylen-Sequenzen
bedeutet.

Beispiele für Diole vom Typ HO-R₁-OH, wobei, R₁ = C₂-C₁₈-Alkylen bedeuten, sind Ethylenglykol, Butandiol, Oktandiol, Dodekandiol und Oktadekandiol.

Beispiele für Diole vom Typ HO-R₂-OH, wobei
R₂ = -[CH₂-CH₂-O-CH₂-CH₂]ₙ- und n = 1-200 ist, sind Polyethylenglykole mit Molmassen von 500 bis 5000.

Beispiele für Diole vom Typ HO-R₃-OH, wobei
R₃ = -[CH₂-CH(CH₃)-O-CH₂-CH(CH₃)]ₙ- und n = 1-200 ist, sind Polypropylenglykole mit Molmassen von 500 bis 5000.

Beispiele für Diole vom Typ HO-R₄-OH, wobei
R₄ = - [O-CH₂-CH₂-CH₂-CH₂]ₙ- und n = 1-200 ist, sind Polytetrahydrofurane mit Molmassen von 500 bis 5000.

Beispiele für Diole vom Typ HO-R₅-OH, wobei
R₅ = -[(CH₂)₂₋₈-O-CO-(C₆-C₁₄) - Arylen-CO-O-(CH₂)₂₋₈]ₙ- und n = 1-200 ist, sind Ester und Polyester auf Basis gesättigter Dicarbonsäuren, wie Terephthalsäure, Isophthalsäure oder Naphthalindicarbonsäure und Diolen wie Ethylenglykol, Butandiol, Neopentylglykol und/oder Hexandiol. Als Ester wird Bis(hydroxyethyl)terephthalat bevorzugt.

Beispiele für Diole vom Typ HO-R₆-OH, wobei
R₆ = -[(CH₂)₂₋₈-O-CO-(C₂-C₁₂)-Alkylen-CO-O-(CH₂)₂₋₈]ₙ- und n = 1-200 ist, sind Polyester auf Basis gesättigter Dicarbonsäuren wie Adipinsäure und/oder Bernsteinsäure, ungesättigter Dicarbonsäuren, wie Maleinsäure, Fumarsäure und/oder Itakonsäure und Diolen wie Ethylenglykol, Butandiol, Neopentylglykol und/oder Hexandiol.

Beispiele für Diole vom Typ HO-R₇-OH, wobei
R₇ = Siloxangruppen enthaltende Sequenzen des Typs 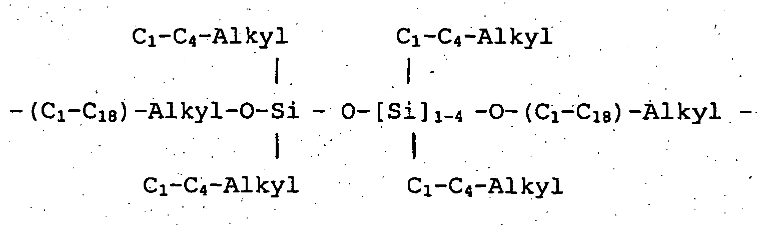 bedeuteten, sind 1,3-Bis(hydroxybutyl)tetramethyldisiloxan und 1,3- Bis(hydroxyoktyl)tetraethyldisiloxan.

Beispiele für Polyestersequenzen mit Siloxangruppen enthaltende Diole vom Typ HO-R₈-OH, wobei
R₈ = - [(X)ᵣ-O-CO-(Y)ₛ-CO-O-(X)ᵣ]-,
bei denen
X =- {(CH₂)₂₋₈-O-CO-(C₆-C₁₄)-Arylen-CO-O-(CH₂)₂₋₈}-
oder
-{(CH₂)₂₋₈-O-CO-(C₂-C₁₂)-Alkylen-CO-O-(CH₂)₂₋₈}-; 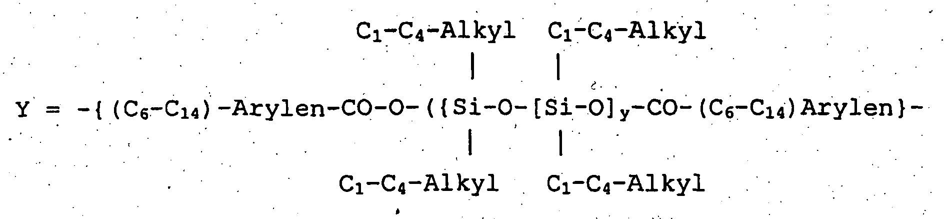 oder 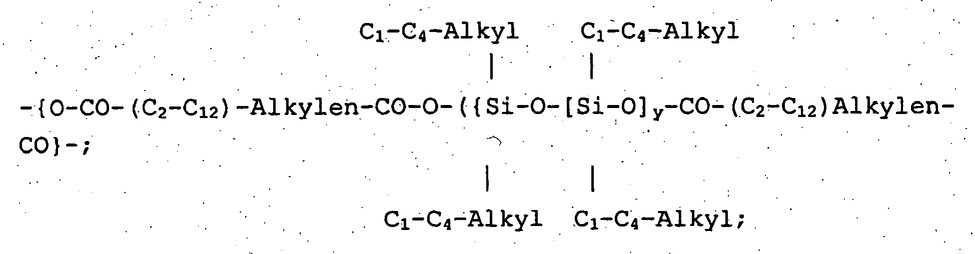 wobei r = 1 bis 70; s = 1 bis 70 und y = 3 bis 50 bedeuten, sind Hydroxylendgruppen enthaltende Polyester auf Basis aromatischer C₆-C₁₄-Arylen-dicarbonsäuren, wie' Terephthalsäure oder Naphthalindicarbonsäure, aliphatische C₂-C₁₂-Alkylendicarbonsäuren wie Adipinsäure, Maleinsäure oder Pimelinsäure. Diolen wie Ethylenglykol, Butandiol, Neopentylglykol oder Hexandiol und Siloxanen wie Hexamethyldisiloxan oder α,ω-Dihydroxypolydimethylsiloxan.

Beispiele für Siloxangruppen enthaltende Polyetherdiole HO-R₉-OH, bei denen R₉ Polyethersequenzen des Typs 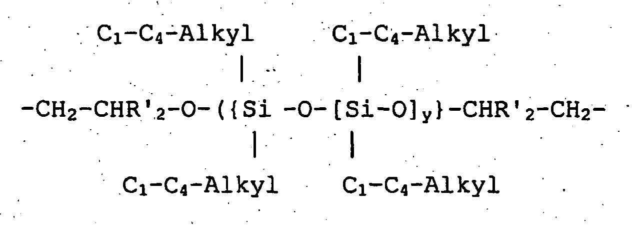 wobei R'₂ = H; C₁-C₄-Alkyl und y = 3 bis 50 bedeuten; sind Polyetherdiole auf Basis von Siloxanen wie Hexamethyldisiloxan oder α,ω-Dihydroxypolydimethylsiloxan und Alkylenoxiden, wie Ethylenoxid oder Propylenoxid.

Beispiele für Diole auf Basis von Alkylenoxidaddukten des Melamins vom Typ
2-Amino-4,6-bis(hydroxy-(C₂-C₄)-alkylenamino)-1,3,5-triazin
sind Diole auf Basis Melamin und Ethylenoxid oder Propylenoxid.

Beispiele für Phenoletherdiole auf Basis zweiwertiger Phenole und C₂-C₈ Diolen vom Typ Bis(hydroxy-(C₂-C₈) - Alkylen-O-) (C₆-C₁₈) -Arylen sind Ethylenoxidaddukte oder Propylenoxid-addukte an Diphenylolpropan.

Neben Diolen als mehrwertige Alkohole können beim Direktsyntheseverfahren ebenfalls dreiwertige Alkohole wie Glycerin oder vierwertige Alkohole auf der Basis von Erythrit oder deren Mischungen mit zweiwertigen Alkoholen eingesetzt werden.

Erfolgt der Zusatz von C₄-C₁₈-Alkoholen und/oder Diolen vom Typ HO-R-OH vor der ersten Verdampferstufe und/oder vor der zweiten Verdampferstufe, so werden zur Homogenisierung der Komponenten vor den Verdampferstufen Mischstrecken installiert.

Vorteilhafterweise sind die veretherten Melaminharzkondensate Mischungen mit mittleren Molmassen von 500 bis 2500 aus Tris(methoxymethylamino)triazin und dessen höhermolekularen Oligomeren sind.

Bevorzugt werden zwei Verdampfungsschritte durchgeführt. Beispielsweise wird das veretherte Melaminharzvorkondensat nach Einstellung eines pH-Wertes von weniger als 10 in einer ersten Verdampferstufe zur Abtrennung des Wasser-Methanol-Gemischs bei Temperaturen zwischen 80 und 130°C und bei einem Druck zwischen 0,1 und 1,0 bar bis zu einem Feststoffanteil an verethertem Melaminharzvorkondensat von 65 Massen-% bis 85 Massen-% eingeengt und in einer zweiten Verdampferstufe zur Erzielung eines Feststoffanteils an verethertem Melaminharzvorkondensat von 95 bis 99,9 Massen-% bei 90 bis 150°C und 0,1 bis 1 bar eingeengt.

Vor und / oder während des Aufkonzentrierens, das heißt vor der ersten und / oder vor der zweiten Verdampferstufe und/oder nach dem Aufkonzentrieren, das heißt vor dem dritten Reaktionsschritt können dem Melaminharzvorkondensat C₄-C₁₈ Alkohole, Diole vom Typ HO-R-OH und / oder vierwertige Alkohole auf der Basis von Erythrit zugesetzt werden. Dabei betragen die Molmassen der Diole bevorzugt 62 bis 20000.

Vor und / oder während des Aufkonzentrierens, das heißt vor der ersten und / oder vor der zweiten Verdampferstufe und/oder nach dem Aufkonzentrieren, das heißt vor dem dritten Reaktionsschritt können dem Melaminharzvorkondensat in Alkoholen oder Wasser gelöste Säuren und/oder Säureanhydride zugegeben werden.

Durch vollständige Abspaltung von Formaldehyd und teilweiser Kondensation wird das praktisch lösungsmittelfreie flüssige Melaminharzvorkondensat in einer dritten Reaktionstufe modifiziert und gegebenenfalls mit Alkoholen und/oder Diolen umgesetzt.

Die dritte Reaktionsstufe wird vorteilhaft in einem kontinuierlichen Kneter durchgeführt. Die Reaktionszeit im Kneter beträgt etwa 2 bis 12 min, die Reaktionstemperatur beträgt 180°C bis 280°C. Im Kneter erfolgt die Entfernung niedermolekularer Reaktionsprodukte durch Entgasung, das veretherte Melaminharzkondensat wird anschließend ausgetragen und granuliert.

Dabei ist es möglich, in den kontinuierlichen Kneter zusätzlich bis zu 75 Massen-% Füllstoffe und/oder Verstärkungsfasern, weitere reaktive Polymere vom Typ Ethylen-Copolymere, Maleinsäureanhydrid-Copolymere, modifizierte Maleinsäureanhydrid-Copolymere, Poly(meth)acrylate, Polyamide, Polyester und/oder Polyurethane, sowie bis zu 2 Massen-%, jeweils bezogen auf die veretherten Melaminharzkondensate, Stabilisatoren, UV-Absorber und/oder Hilfsstoffe zuzugeben.

Als kontinuierliche Kneter können in der dritten Reaktionstufe Doppelschneckenextruder eingesetzt werden, die sowohl nach der Einzugszone als auch nach der Reaktionszone Entgasungszonen besitzen. Solche Doppelschneckenextruder können ein Verhältnis L/D = 36-60 mit gleich- oder gegenläufiger Schneckenanordnung aufweisen.

Grundsätzlich sind als Kneter auch andere, sich mindestens teilweise selbst reinigende, kontinuierlich arbeitende, für die Verarbeitung hochviskoser Medien geeignete Maschinen mit Vakuumentgasung verwendbar (z.B. Buss co Kneter, Einschneckenextruder, Extruder in Kaskadenanordnung,Ein- oder Zweiwellenknetmaschinen des Typs LIST ORP; CRP, Discotherm etc.).

Zur Abtrennung von Inhomogenitäten kann die Schmelze mit einer Zahnradpumpe in einen Schmelzefilter gefördert werden. Die Überführung der Schmelze in Granulatpartikel kann in Granulatoren oder in Pastillierungsanlagen durch Dosierung der Schmelze über eine Aufgabevorrichtung auf ein kontinuierliches Stahlband und Kühlung und Verfestigung der abgelegten Pastillen erfolgen.

Beispiele für geeignete Füllstoffe, die beim Direktsynthese-verfahren in den kontinuierlichen Kneter dosiert werden kön-nen, sind: Al₂O₃, Al (OH)₃, Bariumsulfat, Calciumcarbonat, Glaskugeln, Kieselerde, Glimmer, Quarzmehl, Schiefermehl, Mikrohohlkugeln, Russ, Talkum, Gesteinsmehl, Holzmehl, Cellulosepulver und/oder Schalen- und Kernmehle, wie Erdnussschalenmehl oder Olivenkernmehl. Bevorzugt werden als Füllstoffe Schichtsilikate vom Typ Montmorillonit, Bentonit, Kaolinit, Muskovit, Hectorit, Fluorhectorit, Kanemit, Revdit, Grumantit, Ilerit, Saponit, Beidelit, Nontronit, Stevensit, Laponit, Taneolit, Vermiculit, Halloysit, Volkonskoit, Magadit, Rectorit, Kenyait, Sauconit, Borfluorphlogopite und/ oder synthetische Smectite.

Beispiele für geeignete Verstärkungsfasern, die beim Direktsyntheseverfahren in den kontinuierlichen Kneter dosiert werden können, sind anorganische Fasern, insbesondere Glasfasern und/oder Kohlenstofffasern, Naturfasern, insbesondere Cellulosefasern wie Flachs, Jute, Kenaf und Holzfasern, und/oder Kunststofffasern, insbesondere Fasern aus Polyacrylnitril, Polyvinylalkohol, Polyvinylacetat, Polypropylen, Polyestern und/oder Polyamiden.

Beispiele für reaktive Polymere vom Typ Ethylen-Copolymere, die beim Direktsyntheseverfahren in den kontinuierlichen Kneter dosiert werden können, sind teilverseifte Ethylen-Vinylacetat-Copolymere, Ethylen-Butylacryl-Acrylsäure-Copolymere, Ethylen-Hydroxy-ethylacrylat-Copolymere oder Ethylen-Butylacrylat-Glycidylmethacrylat-Copolymere.

Beispiele für reaktive Polymere vom Typ Maleinsäureanhydrid-Copolymere, die beim Direktsyntheseverfahren in den kontinuierlichen Kneter dosiert werden können, sind C₂-C₂₀-Olefin-Maleinsäureanhydrid-Copolymere oder Copolymere aus Maleinsäureanhydrid und C₈-C₂₀-Vinylaromaten.

Beispiele für die C₂-C₂₀-Olefin-Komponenten, die in den Maleinsäureanhydrid-Copolymeren enthalten sein können, sind E-thylen, Propylen, Buten-1, Isobuten, Diisobuten, Hexen-1, Octen-1, Hepten-1, Pentan-1, 3-Methylbuten-1, 4-Methylpenten-1, Methylethyl-penten-1, Ethylpenten-1, Ethylhexen-1, Octadecen-1 und 5,6-Dimethylnorbornen.

Beispiele für die C₈-C₂₀-Vinylaromaten-Komponenten, die in den Maleinsäureanhydrid-Copolymeren enthaltenen sein können, sind Styren, α-Methylstyren, Dimethylstyren, Isopropenylstyren, p-Methylstyren und Vinylbiphenyl.

Beispiele für modifizierte Maleinsäure anhydrid-Copolymere, die beim Direktsyntheseverfahren in den kontinuierlichen Kneter dosiert werden können, sind partiell oder vollständig veresterte, amidierte bzw. imidierte Maleinsäure anhydrid-Copolymere.

Besonders geeignet sind modifizierte Copolymere aus Maleinsäureanhydrid und C₂-C₂₀-Olefinen bzw. C₈-C₂₀-Vinylaromaten mit einem Molverhältnis von 1 : 1 bis 1 : 9 und Molmassen-Gewichtsmitteln von 5000 bis 500000, die mit Ammoniak, C₁-C₁₈-Monoalkylaminen, C₆-C₁₈-aromatischen Monoaminen, C₂-C₁₈-Monoaminoalkoholen, monoaminierten, Poly(C₂-C₄-alkylen)oxiden einer Molmasse von 400 bis 3000, und/oder monoveretherten Proly(C₂-C₄-alkylen)oxiden einer Molmasse von 100 bis 10000 umgesetzt worden sind, wobei das Molverhältnis der Anhydridgruppen am Copolymeren zu Ammoniak, Aminogruppen C₁-C₁₈-Monoalkylamine, C₆-C₁₈-aromatische Monoamine, C₂-C₁₈-Monoaminoalkohole bzw. monoaminiertes Poly(C₂-C₄-alkylen)oxid und/oder Hydroxygruppen Poly(C₂-C₄-alkylen)oxid 1 : 1 bis 20 : 1 beträgt.

Beispiele für reaktive Polymere vom Typ Poly(meth)acrylate, die beim Direktsyntheseverfahren in den kontinuierlichen Kneter dosiert werden können, sind Copolymere auf Basis von funktionellen ungesättigten (Meth)acrylatmonomeren, wie Acrylsäure, Hydroxyethylacrylat, Glycidylacrylat, Methacrylsäure, Hydroxybutylmethacrylat oder Glycidylmethacrylat und nichtfunktionellen ungesättigten (Meth)acrylatmonomeren, wie Ethylacrylat, Butylacrylat, Ethylhexylacrylat, Methylmethacrylat Ethylacrylat und/oder Butylmethacrylat und/oder C₈-C₂₀-. Vinylaromaten. Bevorzugt werden Copolymere auf Basis Methacrylsäure, Hydroxyethylacrylat, Methylmethacrylat und Styren.

Beispiele für reaktive Polymere vom Typ Polyamide. die beim Direktsyntheseverfahren in den kontinuierlichen Kneter dosiert werden können, sind Polyamid-6, Polyamid-6,6 , Polyamid-11, polyamid-12, Polyaminoamide aus Polycarbonsäuren und Polyalkylenaminen sowie die entsprechenden methoxylierten Polyamide.

Beispiele für reaktive Polymere vom Typ Polyester, die beim Direktsyntheseverfahren in den kontinuierlichen Kneter dosiert werden können, sind Polyester mit Molmassen von 2000 bis 15000 aus gesättigten Dicarbonsäuren wie Phthalsäure, Isophthalsäure, Adipinsäure und/oder Bernsteinsäure, ungesättigten Dicarbonsäuren, wie Maleinsäure, Fumarsäure und/oder Itakonsäure und Diolen wie Ethylenglykol, Butandiol. Neopentylglykol und/oder Hexandiol. Bevorzugt werden verzweigte Polyester auf Basis von Neopentylglykol, Trimethylolpropan, Isophthalsäure und Azelainsäure.

Beispiele für reaktive Polymere vorn Typ Polyurethane, die beim Direktsyntheseverfahren in den kontinuierlichen Kneter dosiert werden können, sind uhvernetzte Polyurethane auf Basis von Toluylendiisocyanat, Diphenylmethandiisocyanat, Butandiisocyanat und/oder Hexandiisocynat als Diisocyanatkomponenten und Butandiol, Hexandiol und/oder Polyalkylenglykole als Diolkomponenten mit Molmassen von 200 bis 30000.

Beispiele für geeignete Stabilisatoren und UV-Absorber, die beim Direktsyntheseverfahren in den kontinuierlichen Kneter dosiert werden können, sind Piperidinderivate, Benzophenonderivate, Benzotriazolderivate, Triazinderivate und/oder Benzofuranonderivate.
Beispiele für geeignete Hilfsstoffe, die beim Direktsyntheseverfahren in den kontinuierlichen Kneter dosiert werden können, sind latente Härter wie Ammoniumsulfat und/oder Ammoniumchlorid und/oder Verarbeitungshilfsmittel wie Calciumstearat, Magnesiumstearat und/oder Wachs.

Die nach dem erfindungsgemäßen Verfahren hergestellten veretherten Melaminharzkondensate sind bevorzugt zur Schmelzeverarbeitung, insbesondere als Schmelzkleber und zur Herstellung von Platten, Rohren, Profilen, Spritzgussteilen, Fasern, Beschichtungen und Schaumstoffen oder zur Verarbeitung aus Lösung oder Dispersion als Adhesiv, Imprägnierharz, Lackharz oder Laminierharz oder zur Herstellung von Schäumen, Mikrokapseln oder Fasern, geeignet.

Der besondere Vorteil der nach dem Direktsyntheseverfahren hergestellten veretherten Melaminharzkondensate mit mittleren Molmassen von 500 bis 50000 besteht darin, dass sie auf Grund der höheren Schmelzviskosität gegenüber üblichen Triazinderivatvorkondensaten wie Melamin-Formaldehyd-Vorkondensaten nach Schmelzeverarbeitungsverfahren wie Thermoplaste verarbeitet werden können und Härte und Flexibilität der daraus hergestellten Erzeugnisse in einem breiten Eigenschaftsbereich einstellbar sind.

Der Anteil an flüchtigen Spaltprodukten während der Aushärtung der nach dem Direktsyntheseverfahren hergestellten veretherten Melaminharzkondensate während der Ausformung der Schmelze zum Erzeugnis ist gegenüber üblichen Formmassen auf Basis von niedrigmolekularen Aminoplast-Vorkondensaten drastisch reduziert. Dadurch lassen sich aus den veretherten Melaminharzkondensaten bei kurzen Taktzeiten rissfreie Erzeugnisse herstellen.

Bevorzugte Einsatzgebiete der nach dem Direktsyntheseverfahren hergestellten veretherten Melaminharzkondensate sind Schmelzkleber sowie die Herstellung von Platten, Rohren, Profilen, Spritzgussteilen, Fasern und Schaumstoffen.

Die nach dem Direktsyntheseverfahren hergestellten veretherten Melaminharzkondensate, insofern sie keine Füllstoffe oder weitere reaktive Polymere enthalten, sind in polaren Lösungmitteln vom Typ C₁-C₁₀-Alkohole, Dimethylformamid oder Dimethylsulfoxid in Konzentrationen bis 60 Massen-% löslich. Die Lösungen oder Dispersionen sind als Adhesiv, Imprägniermittel, Lackharz- oder Laminierharzrezeptur oder zur Herstellung von Schäumen, Mikrokapseln oder Fasern geeignet. Die Vorteile der Lösungen bzw. Dispersionen der nach dem Direktsyntheseverfahren hergestellten veretherten Melaminharzkondensate gegenüber üblichen Triazinharz-Vorkondensaten bestehen in der höheren Viskosität und den daraus resultierenden besseren Verlaufseigenschaften oder höheren Festigkeiten nicht ausgehärteter Zwischenprodukte bei der Faser- oder Schaumherstellung.

Die Aufgabe wird auch durch Melaminharzerzeugnisse gelöst, die unter Verwendung der nach dem erfindungsgemäßen Verfahren hergestellten veretherten Melaminharzkondensate hergestellt werden.

Die Erfindung wird nachfolgend unter Bezugnahme auf die Figuren der Zeichnungen an einem Ausführungsbeispiel näher erläutert. Es zeigt:

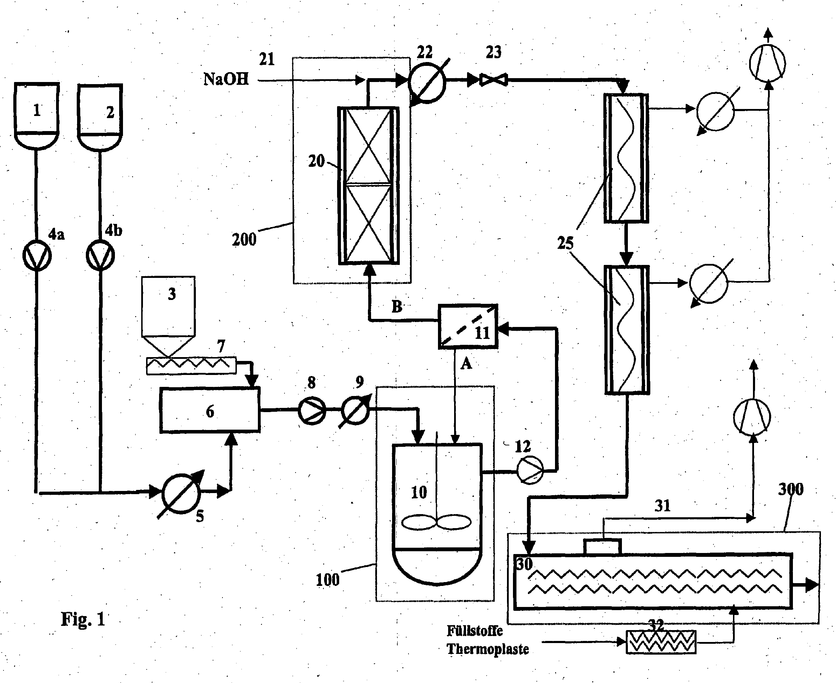

- Fig. 1: ein Fließbild einer Ausführungsform des erfindungsgemäßen Verfahrens.

Im Folgenden wird schematisch eine Ausführungsform des erfindungsgemäßen kontinuierlichen Direktsyntheseverfahrens beschrieben. Im vorliegenden Beispiel werden drei Reaktionsstufen 100, 200, 300 verwendet.

Als Edukte dienen im hier dargestellten Beispiel Melamin, Formaldehyd und Methanol. Alternativ können auch andere Aldehyde und Alkohole verwendet werden.

Aus einem Vorlagebehälter für Methanol 1 und einem Vorlagebehälter für die wässrige 37 %-ige Formaldehydlösung 2 werden die Edukte über Dosierpumpen 4a, 4b einem kontinuierlichen Mischer 6 für Feststoffe (insbesondere Pulver) und Flüssigkeiten zugeführt. Beide Edukte werden dabei in einem ersten vorwärmer 5 vorgewärmt.

Aus einem Vorlagebehälter für Melamin 3 wird Melamin kontinuierlich mit einer Feststoffdosievorrichtung 7 dem Feststoffeingang des Mischers 6 zugeführt. Der Mischer 6 sorgt dafür, dass eine homogene Suspension aus Methanol, Formaldehyd und Wasser entsteht.

Eine Druckerhöhungspumpe 8 fördert diese Suspension über einen zweiten Vorwärmer 9 zur ersten Reaktionsstufe 100, die als kontinuierlicher Rührreaktor 10 ausgebildet ist. In die-sem ersten Reaktor 10 wird Melamin bei Temperaturen zwischen 70 und 140 °C und einem Druck zwischen 2 und 30 bar mit den anderen Edukten umgesetzt. Kontinuierliche Rührkessel zeichnen sich durch eine besonders gute Durchmischung des Reaktorinhalts aus, da die verwendeten Rührer auf die Eigenschaften der Reaktionsedukte und -produkte eingestellt werden können. Dabei kann statt einem Rührreaktor grundsätzlich auch eine Reaktorkaskade aus mehr als einem kontinuierlichen Rührkessel verwendet werden.

Das im ersten Reaktor 10 enthaltene heterogene Reaktionsprodukt ist eine Suspension, die im Folgenden in eine reststoffreiche Phase A und eine praktisch feststofffreie Phase B (Klarlösung) getrennt wird.

Aus einem hier nicht dargestellten Überlauf des ersten Reaktors 10 wird die Suspension mit einer zweiten Pumpe 12 abgezogen und einer Fest-Flüssig-Phasentrennvorrichtung 11 zugeführt. Im vorliegenden Ausführungsbeispiel ist Fest-Flüssig-Phasentrennvorrichtung als Querstromfilter ausgebildet. Alternativ können aber auch,Zentrifugen, insbesondere Tellerzentrifugen oder Hydrozyklone als Fest-FlüssigPhasentrennvorrichtung 11 verwendet werden. Grundsätzlich ist es auch hier möglich, die Fest-Flüssig-Phasentrennvorrichtung 11 mehrstufig (Hydrozyklon) auszubilden.

Das nicht gelöste Melamin und / oder die nicht gelösten Melaminreaktionsprodukte bilden die feststoffreiche Phase A; die in den ersten Reaktor 10 zurückgeführt wird.

Die feststoffarme Phase B wird als Klarlösung zur weiteren Umsetzung einem zweiten Reaktor 20 der zweiten Reaktionsstufe 200 zugeführt, der als Rohrreaktor ausgebildet ist. Grundsätzlich kann auch die zweite Reaktionsstufe aus mehr als einem Reaktorbehälter bestehe.

Im zweiten Reaktor 20 wird die Harzlösung verethertund weiter methyloliert. Zur Verbesserung der Durchmischung im zweiten Reaktor 20 verfügt dieser über statische Mischer und /oder Füllkörper. Die Umsetzung (Veretherung, weitere Methylolierung) erfolgt in der zweiten Reaktionsstufeunter sauren Bedingungen, bei einem pH-Wert zwischen 5 und 6.

Dem homogenen Reaktionsprodukt (Melaminharzvorkondensat) des zweiten Reaktors 20 wird am Ausgang der zweiten Reaktionsstufe zur Einstellung eines pH-Wertes von größer als 9 eine NaOH Lösung zudosiert 21. Über einen Wärmeübertrager 22 zur Abkühlung des Melaminharzvorkondensates und ein Drosselventil 23 wird das Melaminharzvorkondensat einer Verdampfungsstufe 25 zugeführt.

Diese Verdampferstufe 25 kann aus einem oder mehreren Verdampfern bestehen, wobei als Verdampfer Fallfilmverdampfer, Rotationsverdampfer oder auch andere Verdampferbauarten eingesetzt werden können.

Anschließend wird das aufkonzentrierte Melaminharzvorkondensat der dritten Reaktionsstufe 300 mit einem für die Umsetzung hochviskoser Produkte geeigneten Reaktor 30 zugeführt, der hier als kontinuierlicher Kneter ausgebildet ist. Mit einer Seitendosierung 32 wird der Schmelze ein Additiv zugegeben. Ferner weist der Kneter 30 einen Abzug 31 für leichtflüchtige Reaktionsprodukte auf.

Die Erfindung beschränkt sich in ihrer Ausführung nicht auf die vorstehend angegebenen bevorzugten Ausführungsbeispiele. Vielmehr ist eine Anzahl von Varianten denkbar, die von dem erfindungsgemäßen Verfahren auch bei grundsätzlich anders gearteten Ausführungen Gebrauch machen.

### Bezugszeichenliste

- 1: Vorlagebehälter für Methanol
- 2: Vorlagebehälter für Formaldehyd
- 3: Vorlagebehälter für Melamin.
- 4a,b: Dosierpumpen
- 5: erster Vorwärmer
- 6: Mischer
- 7: Feststoffdosiervorrichtung
- 8: Druckerhöhungspumpe
- 9: zweiter Vorwärmer

- 10: erster Reaktor
- 11: Fest-Flüssig-Phasentrennvorrichtung
- 12: Kreislaufpumpe

- 20: zweiter Reaktor (Rohrereaktor)
- 21: NaOH Dosierung
- 22: Produktkühler
- 23: Entspannungsventil
- 25: Verdampfer (zweistufig)

- 30: dritter Reaktor (Mischer, Kneter)
- 31: Entfernung leichtflüchtiger Reaktionsprodukte
- 32: Feststoffzugabe (Füllstoffe, Thermoplaste)

- 100: erste Reaktionsstufe
- 200: zweite Reaktionsstufe
- 300: dritte Reaktionsstufe

- A: feststoffreiche Phase
- B: feststoffarme Phase (klare Reaktionslösung)

## Patentansprüche

1. Verfahren zur Synthese eines Melaminflüssigharzes,
**dadurch** gekennzeichriet, dass
a) in einer kontinuierlichen ersten Reaktionsstufe (100), die insbesondere mindestens einen Rührkessel aufweist, Melamin, mindestens ein Aldehyd und mindestens ein Alkohol zugeführt und in ihr umgesetzt wird,
b) das Reaktionsgemisch, insbesondere eine Suspension, zur Trennung in eine feststoffreiche Phase (A) und in eine feststoffarme Phase (B) einer Fest-Flüssig-Phasentrennvorrichtung (11) zugeführt wird,
c) die nach der Fest-Flüssig-Phasentrennung vorliegende feststoffreiche Phase (A) in die erste Reaktionsstufe (100) zurückgeführt wird und
d) die nach der Fest-Flüssig-Phasentrennung vorliegende feststoffarme Phase (B) weiteren Verarbeitungsschritten zugeführt wird, insbesondere in eine zweite Reaktionsstufe (200) gefördert und dort weiter umgesetzt wird.

2. Verfahren nach Anspruch 1, **dadurch gekenzeichnet**, dass die festsstoffreiche Phase (A) reich an nicht gelöstem Melamin ist.

3. Verfahren nach Anspruch 1 oder 2, **dadurch gekennzeichnet, dass** das Reaktionsprodukt als Suspension von einem Überlauf eines Reaktors der ersten Reaktionsstufe (100), insbesondere des letzten Reaktors der ersten Reaktionsstufe (100) abgezogen und in die Fest-Flüssig-Phasentrennvorrichtung (11) gefördert wird.

4. Verfahren nach mindestens einem der vorhergehenden Ansprüche, **dadurch gekennzeichnet, dass** die Fest-Flüssig-Phasentrennvorrichtung (11) als Hydrozyklon, als Zentrifuge, insbesondere als Tellerzentrifuge oder als Filter ausgebildet ist.

5. Verfahren nach mindestens einem der vorhergehenden Ansprüche, **dadurch gekennzeichnet, dass** mindestens ein Alkohol Methanol und mindestens ein Aldehyd eine Lösung von Formaldehyd (37%-fig) in Wasser und Methanol verwendet wird.

6. Verfahren nach Anspruch 5, **dadurch gekennzeichnet, dass** vor der ersten Reaktionsstufe (100) die Reaktanden in einem kontinuierlichen Mischer (6) homogen vorgemischt werden.

7. Verfahren nach mindestens einem der vorhergehenden Ansprüche, **dadurch gekennzeichnet, dass** die Reaktion in mindestens einem Reaktor (10) der ersten Reaktionsstufe (100) bei Temperaturen zwischen 70 und 140°C und bei einem Druck zwischen 2 und 30 bar stattfindet.

8. Verfahren nach mindestens einem der vorhergehenden Ansprüche, **dadurch gekennzeichnet, dass** die feststoffarme Phase (B) nach der Fest-Flüssig-Phasentrennvorrichtung (11) mindestens einer kontinuierlichen zweiten Reaktionsstufe (200), insbesondere mit mindestens einem Rohrreaktor zur weiteren Veretherung zugeführt wird.

9. Verfahren nach Anspruch 8, **dadurch gekennzeichnet, dass** die Reaktion in der zweite Reaktionsstufe (200) unter sauren Bedingungen, insbesondere bei einem pH-Wert zwischen 5 und 6 durchgeführt wird.

10. Verfahren nach Anspruch 8 oder 9, **dadurch gekennzeichnet, dass** die zweite Reaktionsstufe (200) in Gegenwart von heterogenen sauren Katalysatoren wie z. B. sauren Ionenaustauschern durchgeführt wird.

11. Verfahren nach mindestens einem der Ansprüche 8 bis 10, **dadurch gekennzeichnet, dass** mindestens ein Reaktor (20) der zweiten Reaktionsstufe (200) Mischelemente, insbesondere statische Mischer und / oder Füllkörper aufweiset.

12. Verfahren nach mindestens einem der Ansprüche 8 bis 11, **dadurch gekennzeichnet, dass** dem Reaktionsgemisch vor der zweiten Reaktionsstufe (200) homogene Katalysatoren zugemischt werden.

13. Verfahren nach mindestens einem der Ansprüche 8 bis 12, **dadurch gekennzeichnet, dass** nach der zweiten Reaktionsstufe (200) ein pH-Wert von mehr als 9 eingestellte wird, insbesondere durch Zudosierung (21) von Natronlauge.

14. Verfahren nach mindestens einem der Ansprüche 8 bis 13, **dadurch gekennzeichnet, dass** das Reaktionsprodukt mindestens eines zweiten Reaktors (20) in alkoholischer Lösung in mindestens einem Verdampfungsschritt (25) aufkonzentriert wird, wobei dem Melaminharzvorkondensat vor, während und/oder nach dem Aufkonzentrieren C₄-C₁₈-Alkohole, Diole vom Typ HO-R-OH und / oder vierwertige Alkohole auf der Basis von Erythrit zugesetzt werden und in einer dritten Reaktionsstufe (300) das aufkonzentrierte Melaminharzvorkondensat mit einem Mischer (30), insbesondere einem Kneter umgesetzt wird.

15. Verfahren nach Anspruch 14, **dadurch gekennzeichnet, dass** mindestens ein Diol vom Typ - Holz-R-OH mit Molmassen von 62 bis 20000 oder eine Mischung von mindestens zwei Diolen vom Typ HO-R-OH mit Molmassen von 62 bis 20000 eingesetzt werden, wobei der Substituent R eine der folgendem Strukturen aufweisen kann
C₂-C₁₈-Alkylen,
-CH(CH₃) -CH₂-O- (C₂-C₁₂)-Alkylen-O-CH₂-CH(CH₃)-,
-CH (CH₃) -CH₂-O- (C₂-C₁₂) -Arylen-O-CH₂-CH (CH₃)-,
-(CH₂- CH₂- CH₂- CH₂- CH₂-CO)ₓ - (CH₂-CHR)_{y} -
- [CH₂-CH₂-O-CH₂-CH₂]ₙ -,
- [CH₂-CH(CH₃)-O-CH₂-CH(CH₃)]ₙ-,
- [O-CH₂-CH₂-CH₂-CH₂]ₙ-,
- [(CH₂)₂₋₈-O-CO- (C₆-C₁₄) -Arylen-CO-O-(CH₂)₂₋₈]ₙ -,
- [(CH₂)₂₋₈-O-CO- (C₂-C₁₂) -Alkylen-CO-O- (CH₂)₂₋₈]ₙ -,
wobei n = 1 bis 200; x= 5 bis 15; 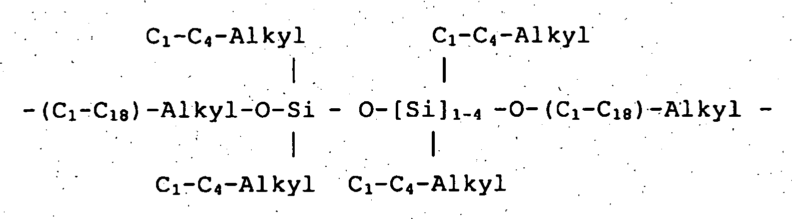
- Siloxangruppen enthaltende Polyestersequenzen des Typs
-[(X)ᵣ-O-CO-(Y)ₛ-CO-O-(X)ᵣ]-,
bei denen
X =-{(CH₂)₂₋₈-O-CO-(C₆-C₁₄)-Arylen-CO-O-(CH₂)₂₋₈}-
oder
-{(CH₂)₂₋₈-O-CO-(C₂-C₁₂)-Alkylen-CO-O-(CH₂)₂₋₈}- ; 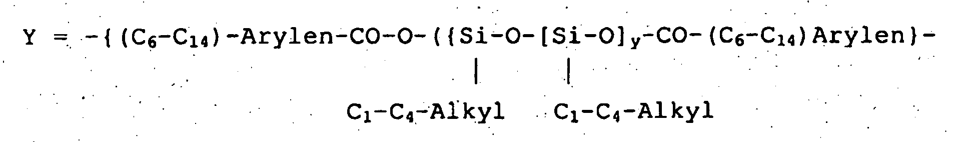 oder 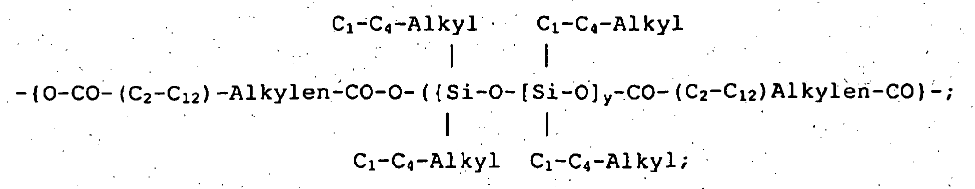 wobei r = 1 bis 70; s = 1 bis 70 und y = 3 bis 50 bedeuten;
- Siloxangruppen enthaltende Polyethersequenzen des Typs 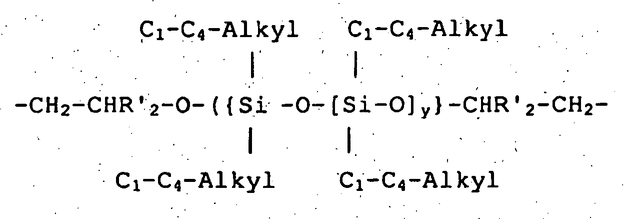
- Sequenzen auf Basis von Alkylenoxidaddukten des Melamins vom Typ 2-Amino-4,6-di-(C₂-C₄)alkylenamino-1,3,5-triazin-Sequenzen
- Phenolethersequenzen auf Basis zweiwertiger Phenole und C₂-C₈-Diolen vom Typ -(C₂-C₈)Alkylen-O- (C₆-C₁₈) -Arylen-O- (C₂-C₈)-Alkylen-Sequenzen
bedeutet.

16. Verfahren nach Anspruch 14 oder 15, **dadurch gekennzeichnet, dass** die veretherten Melaminharzkondensate Mischungen mit mittleren Molmassen von 500 bis 2500 aus Tris(methoxymethylamino)triazin und dessen höhermolekularen Oligomeren sind.

17. Verfahren nach mindestens einem der Ansprüche 14 bis 16, **dadurch gekennzeichnet, dass** vor und / oder während des Aufkonzentrierens, das heißt vor der ersten und / oder vor der zweiten Verdampferstufe und/oder nach dem Aufkonzentrieren, das heißt vor der zweiten Reaktionsstufe (200) dem Melaminharzvorkondensat in Alkoholen oder Wasser gelöste Säuren und/oder Säureanhydride zugegeben werden.

18. Verfahren nach mindestens einem der Ansprüche 14 bits 17, **dadurch gekennzeichnet, dass** das nach der Verdampfung erhaltene aufkonzentrierte Melaminharzvorkondensat eine Konzentration von 95 bis 99 Gew-% aufweist.

19. Verfahren nach mindestens einem der Ansprüche 14 bis 18, **dadurch gekennzeichnet, dass** die Verdampfung der niedermolekularen Komponenten zweistufig erfolgt.

20. Verfahren nach mindestens einem der Ansprüche 14 bis 18, **dadurch gekennzeichnet, dass** der Kneter (30) als ein sich mindestens teilweise selbst reinigender, kontinuierlich arbeitender Extruder mit Vakuumentgasung ausgebildet ist.

21. Verfahren nach mindestens einem der Ansprüche 14 bis 18, **dadurch gekennzeichnet, dass** als Kneter (30) ein Doppelschneckenextruder mit Entgasungszonen verwendet wird.

22. Verfahren nach mindestens einem der Ansprüche 14 bis 19, **dadurch gekennzeichnet, dass** im kontinuierlichen Kneter (30) zusätzlich bis zu 75 Massen-% Füllstoffe und/oder Verstärkungsfasern, weitere reaktive Polymere vom Typ Ethylen-Copolymere, Maleinsäureanhydrid-Copolymere, modifizierte Maleinsäureanhydrid-Copolymere, Poly(meth)acrylate, Polyamide, Polyester und/oder Polyurethane, sowie bis zu 2 Massen-%, jeweils bezogen auf die veretherten Melaminharzkondensate, Stabilisatoren, UV-Absorber und/oder Hilfsstoffe eingearbeitet werden.

23. Verfahren nach mindestens einem der Ansprüche 14 bis 22, **dadurch gekennzeichnet, dass** das Melaminharzkondensat nach einer dritten Reaktionsstufe (300) ausgetragen und granuliert wird.

## Claims

1. Process for the synthesis of a liquid melamine resin,
**characterized in that**
a) melamine, at least one aldehyde and at least one alcohol are fed to a continuous first reaction stage (100) which has in particular at least one stirred vessel and are reacted therein,
b) the reaction mixture, in particular a suspension, is fed to a solid-liquid phase separation apparatus (11) for separation into a solids-rich phase (A) and a solids-poor phase (B),
c) the solids-rich phase (A) present after the solid-liquid phase separation is recycled to the first reaction stage (100) and
d) the solids-poor phase (B) present after the solid-liquid phase separation is fed to further processing steps, in particular transported to a second reaction stage (200) and further reacted there.

2. Process according to Claim 1, **characterized in that** the solids-rich phase (A) is rich in undissolved melamine.

3. Process according to Claim 1 or 2, **characterized in that** the reaction product is taken off as a suspension from an overflow of a reactor of the first reaction stage (100), in particular of the last reactor of the first reaction stage (100), and transported into the solid-liquid phase separation apparatus (11).

4. Process according to at least one of the preceding claims, **characterized in that** the solid-liquid phase separation apparatus (11) is in the form of a hydrocyclone, in the form of a centrifuge, in particular in the form of a disc centrifuge, or in the form of a filter.

5. Process according to at least one of the preceding claims, **characterized in that** at least one alcohol methanol is used and at least one aldehyde a solution of formaldehyde (37% strength) in water and methanol is used.

6. Process according to Claim 5, **characterized in that** the reactants are homogeneously premixed in a continuous mixer (6) before the first reaction stage (100).

7. Process according to at least one of the preceding claims, **characterized in that** the reaction takes place in at least one reactor (10) of the first reaction stage (100) at temperatures between 70 and 140°C and at a pressure between 2 and 30 bar.

8. Process according to at least one of the preceding claims, **characterized in that**, after the solid-liquid phase separation apparatus (11), the solids-poor phase (B) is fed to at least one continuous second reaction stage (200), in particular having at least one tubular reactor for further etherification.

9. Process according to Claim 8, **characterized in that** the reaction in the second reaction stage (200) is carried out under acidic conditions, in particular at a pH between 5 and 6.

10. Process according to Claim 8 or 9, **characterized in that** the second reaction stage (200) is carried out in the presence of heterogeneous acidic catalysts, such as, for example, acidic ion exchangers.

11. Process according to at least one of Claims 8 to 10, **characterized in that** at least one reactor (20) of the second reaction stage (200) has mixing elements, in particular static mixers and/or packings.

12. Process according to at least one of Claims 8 to 11, **characterized in that** homogeneous catalysts are mixed with the reaction mixture before the second reaction stage (200).

13. Process according to at least one of Claims 8 to 12, **characterized in that**, after the second reaction stage (200), a pH of more than 9 is established, in particular by metering in (21) sodium hydroxide solution.

14. Process according to at least one of Claims 8 to 13, **characterized in that** the reaction product of at least one second reactor (20) in alcoholic solution is concentrated in at least one evaporation step (25), C₄-C₁₈-alcohols, diols of the type HO-R-OH and/or tetrahydric alcohols based on erythritol being added to the melamine resin precondensate before, during and/or after the concentration and the concentrated melamine resin precondensate being reacted in a third reaction stage (300) by means of a mixer (30), in particular a kneader.

15. Process according to Claim 14, **characterized in that** at least one diol of the type HO-R-OH having molar masses of 62 to 20 000 or a mixture of at least two diols of the type HO-R-OH having molar masses of 62 to 20 000 are used, it being possible for the substituent R to have one of the following structures
C₂-C₁₈-alkylene,
-CH(CH₃)-CH₂-O- (C₂-C₁₂)-alkylene-O-CH₂-CH(CH₃) -,
-CH(CH₃)-CH₂-O-(C₂-C₁₂)-arylene-O-CH₂-CH(CH₃)-,
- (CH₂-CH₂-CH₂-CH₂-CH₂-CO)ₓ-(CH₂-CHR)_{y}-,
-[CH₂-CH₂-O-CH₂-CH₂]ₙ-,
- [CH₂-CH(CH₃)-O-CH₂-CH(CH₃)]ₙ-,
- [O-CH₂-CH₂-CH₂-CH₂]ₙ-,
- [(CH₂)₂₋₈-O-CO-(C₆-C₁₄)-arylene-CO-O-(CH₂)₂₋₈]ₙ-,
- [(CH₂)₂₋₈-O-CO-(C₂-C₁₂)-alkylene-CO-O-(CH₂)₂₋₈]ₙ-, in which n = 1 to 200; x = 5 to 15; 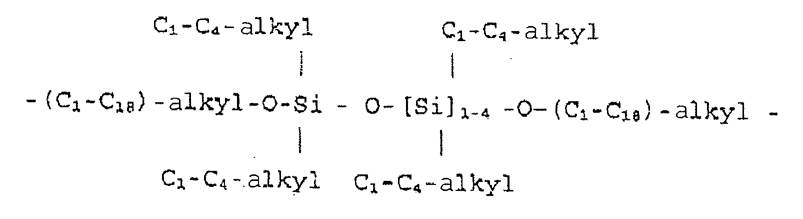
- polyester sequences containing siloxane groups and of the type
-[(X)ᵣ-O-CO-(Y)ₛ-CO-O-(X)ᵣ]-
in which
X = -{(CH₂)₂₋₈-O-CO-(C₆-C₁₄)-arylene-CO-O-(CH₂)₂₋₈}-
or
-{(CH₂)₂₋₈-O-CO-(C₂-C₁₂)-alkylene-CO-O-(CH₂)₂₋₈}-; 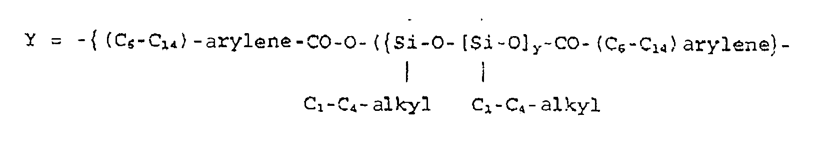 or 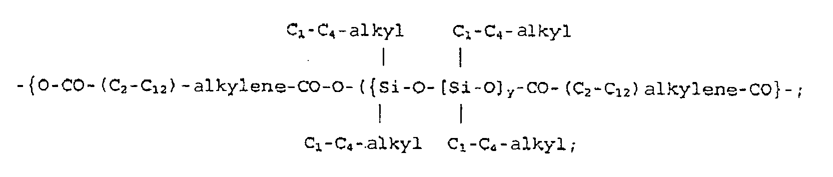 in which r denotes 1 to 70; s denotes 1 to 70 and y denotes 3 to 50;
- polyether sequences containing siloxane groups and of the type 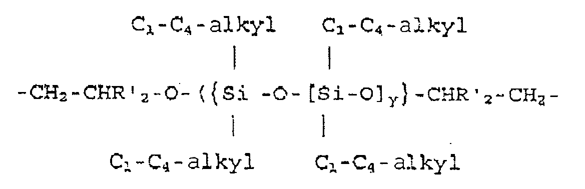
- sequences based on alkylene oxide adducts of melamine of the type 2-amino-4,6-di(C₂-C₄)alkyleneamino-1,3,5-triazine sequences
- phenol ether sequences based on dihydric phenols and C₂-C₈-diols of the type - (C₂-C₈)alkylene-O- (C₆-C₁₈) -arylene-O- (C₂-C₈)-alkylene sequences.

16. Process according to Claim 14 or 15, **characterized in that** the etherified melamine resin condensates are mixtures having average molar masses of 500 to 2500 and comprising tris(methoxymethylamino)-triazine and higher molecular weight oligomers thereof.

17. Process according to at least one of Claims 14 to 16, **characterized in that**, before and/or during the concentration, i.e. before the first and/or before the second evaporator stage, and/or after the concentration, i.e. before the second reaction stage (200), acids and/or acid anhydrides dissolved in alcohols or water are added to the melamine resin precondensate.

18. Process according to at least one of Claims 14 to 17, **characterized in that** the concentrated melamine resin precondensate obtained after the evaporation has a concentration of 95 to 99% by weight.

19. Process according to at least one of Claims 14 to 18, **characterized in that** the evaporation of the low molecular weight components is effected in two stages.

20. Process according to at least one of Claims 14 to 18, **characterized in that** the kneader (30) is in the form of a continuously operating extruder which is at least partly self-purging and has vacuum devolatilization.

21. Process according to at least one of Claims 14 to 18, **characterized in that** the kneader (30) used is a twin-screw extruder having devolatilization zones.

22. Process according to at least one of Claims 14 to 19, **characterized in that**, in the continuous kneader (30), additionally up to 75% by mass of fillers and/or reinforcing fibres, further reactive polymers of the type consisting of ethylene copolymers, maleic anhydride copolymers, modified maleic anhydride copolymers, poly(meth)acrylates, polyamides, polyesters and/or polyurethanes, and up to 2% by mass, based in each case on the etherified melamine resin condensates, of stabilizers, UV absorbers and/or auxiliaries are incorporated.

23. Process according to at least one of Claims 14 to 22, **characterized in that** the melamine resin condensate is discharged and granulated after a third reaction stage (300).

## Revendications

1. Procédé de synthèse d'une résine liquide de mélamine,
**caractérisé en ce que**
a) dans une première étape de réaction en continu (100), laquelle comprend en particulier au moins une cuve de mélange, on amène de la mélamine, au moins un aldéhyde et au moins un alcool et on les fait réagir dans celle-ci,
b) le mélange réactionnel, en particulier une suspension, est amené dans un dispositif de séparation de phase solide-liquide (11), à des fins de séparation d'une phase riche en matières solides (A) et d'une phase pauvre en matières solides (B),
c) la phase riche en matières solides (A) obtenue après la séparation de phase solide-liquide est à nouveau amenée dans la première étape de réaction (100) et
d) la phase pauvre en matières solides (B) obtenue après la séparation solide-liquide est amenée vers d'autres étapes de traitement, en particulier une deuxième étape de réaction (200) et on l'y fait réagir davantage.

2. Procédé selon la revendication 1, **caractérisé en ce que** la phase riche en matières solides (A) est riche en mélamine non dissoute.

3. Procédé selon la revendication 1 ou 2, **caractérisé en ce que** le produit de réaction est soutiré sous forme d'une suspension d'un trop-plein d'un réacteur de la première étape de réaction (100), en particulier du dernier réacteur de la première étape de réaction (100) et est envoyé vers le dispositif de séparation de phase solide-liquide (11).

4. Procédé selon au moins l'une quelconque des revendications précédentes, **caractérisé en ce que** le dispositif de séparation de phase solide-liquide (11) est un hydrocyclone, une centrifugeuse, en particulier une centrifugeuse à plateau ou un filtre.

5. Procédé selon au moins l'une quelconque des revendications précédentes, **caractérisé en ce que** le au moins un alcool est le méthanol, et le au moins un aldéhyde est une solution de formaldéhyde (à 37 %) dans l'eau et de méthanol.

6. Procédé selon la revendication 5, **caractérisé en ce que** les réactifs sont prémélangés de manière homogène dans un mélangeur continu (6) avant la première étape de réaction (100).

7. Procédé selon au moins l'une quelconque des revendications précédentes, **caractérisé en ce que** la réaction a lieu dans au moins un réacteur (10) de la première étape de réaction (100) à des températures comprises entre 70 et 140 °C et à une pression comprise entre 2 et 30 bars.

8. Procédé selon au moins l'une quelconque des revendications précédentes, **caractérisé en ce que** la phase pauvre en matières solides (B) est amenée après le dispositif de séparation de phase solide-liquide (11) vers au moins une deuxième étape de réaction en continu (200), en particulier avec au moins un réacteur tubulaire pour une éthérification supplémentaire.

9. Procédé selon la revendication 8, **caractérisé en ce que** la réaction dans la deuxième étape de réaction (200) est réalisée dans des conditions acides, en particulier à une valeur de pH comprise entre 5 et 6.

10. Procédé selon la revendication 8 ou 9, **caractérisé en ce que** la deuxième étape de réaction (200) est réalisée en présence de catalyseurs acides hétérogènes tels que par exemple des échangeurs d'ions acides.

11. Procédé selon au moins l'une quelconque des revendications 8 à 10, **caractérisé en ce qu'**au moins un réacteur (20) de la deuxième étape de réaction (200) comprend des éléments de mélange, en particulier un mélangeur statique et/ou un matériau de remplissage.

12. Procédé selon au moins l'une quelconque des revendications 8 à 11, **caractérisé en ce que** des catalyseurs homogènes sont mélangés au mélange réactionnel avant la deuxième étape de réaction (200).

13. Procédé selon au moins l'une quelconque des revendications 8 à 12, **caractérisé en ce qu'**après la deuxième étape de réaction (200), on procède à un ajustement de valeur de pH à une valeur supérieure à 9, en particulier par addition (21) de soude caustique.

14. Procédé selon au moins l'une quelconque des revendications 8 à 13, **caractérisé en ce que** le produit de réaction issu d'au moins un second réacteur (20), en solution alcoolique, est concentré dans au moins une étape d'évaporation (25), des alcools en C₄ à C₁₈, des diols de type HO-R-OH et/ou des alcools tétravalents à base d'érythritol étant ajoutés au précondensat de résine de mélamine avant, pendant et/ou après la concentration et le précondensat de résine de mélamine concentré ayant été mis à réagir, dans une troisième étape de réaction (300), avec un mélangeur (30), en particulier un malaxeur.

15. Procédé selon la revendication 14, **caractérisé en ce que** l'on utilise au moins un diol de type HO-R-OH ayant des masses molaires de 62 à 20 000 ou un mélange d'au moins deux diols de type HO-R-OH ayant des masses molaires de 62 à 20 000, le substituant R pouvant présenter l'une des structures suivantes :
alkylène en C₂ à C₁₈,
-CH(CH₃)-CH₂-O-alkylène (en C₂ à C₁₂) -O-CH₂-CH(CH₃)-,
-CH(CH₃)-CH₂-O-arylène(en C₂ à C₁₂)-O-CH₂-CH(CH₃)-,
-(CH₂- CH₂- CH₂- CH₂- CH₂-CO)ₓ-(CH₂-CHR)_{y}-
-[CH₂-CH₂-O-CH₂-CH₂]ₙ-,
-[CH₂-CH(CH₃)-O-CH₂-CH(CH₃)]ₙ-,
-[O-CH₂-CH₂-CH₂-CH₂]ₙ-,
-[(CH₂)_{2 à 8}-O-CO-arylène (en C₆ à C₁₄)-CO-O-CH₂)-_{2 à 8}]ₙ-,
-[(CH₂)_{2 à 8}-O-CO-alkylène (en C₂ à C₁₂)-CO-O-CH₂)-_{2 à 8}]ₙ-,
dans lesquelles n = 1 à 200, x = 5 à 15 ; 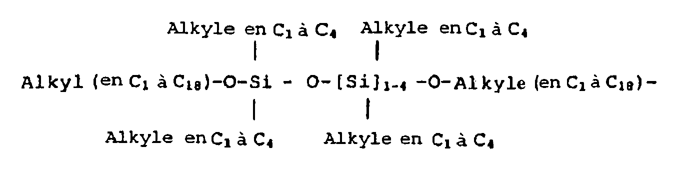
- les séquences de polyester contenant des groupes siloxane du type
-[(X)ᵣ-O-CO-(Y)ₛ-CO-O(X)ᵣ]-,
dans lesquelles
X =-{(CH₂)_{2 à 8}-O-CO-Arylèn(en C_{6 à} C₁₄)-CO-O-(CH₂)_{2 à 8}}-
ou
-{(CH₂)_{2 à 8}-O-CO-Alkylèn (en C₂ à C₁₂)-CO-O-(CH₂)_{2 à 8}}- ; 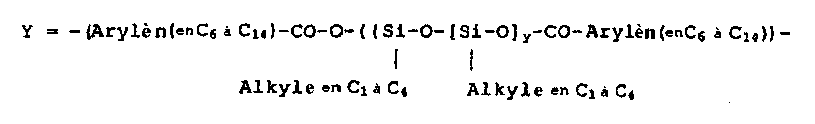 ou 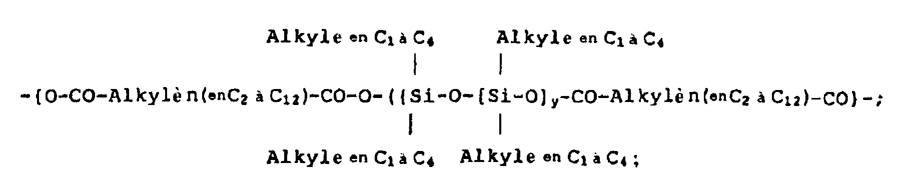 dans lesquelles r = 1 à 70; s = 1 à 70 et y = 3 à 50 ;
- les séquences de polyéther contenant des groupes siloxane du type 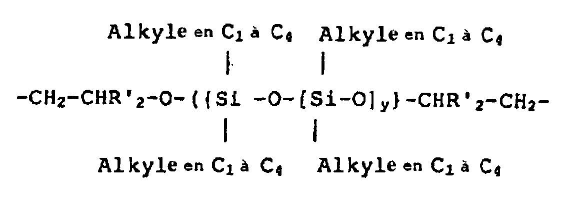
- des séquences à base d'adduits d'oxyde d'alkylène de mélamine du type séquences 2-amino-4,6-di-alkylèneamino (en C₂ à C₄)-1,3,5-triazine
- des séquences de phénoléther à base de phénols bivalents et de diols en C₂ à C₈ du type séquences -alkylène (en C₂ à C₈)-O-arylène (en C₆ à C₁₈)-O-alkylène (en C₂ à C₈).

16. Procédé selon la revendication 14 ou 15, **caractérisé en ce que** les condensats de résine de mélamine éthérés sont des mélanges, de masse molaire moyenne comprise entre 500 et 2 500, de tris(méthoxyméthylamino)triazine et de ses oligomères de poids moléculaire supérieur.

17. Procédé selon au moins l'une quelconque des revendications 14 à 16, **caractérisé en ce qu'**avant et/ou pendant la concentration, c'est-à-dire avant la première et/ou avant la deuxième étape d'évaporation, et/ou après la concentration, c'est-à-dire avant la deuxième étape de réaction (200), on ajoute des acides et/ou des anhydrides d'acide dissous dans des alcools ou dans l'eau au précondensat de résine de mélamine.

18. Procédé selon au moins l'une quelconque des revendications 14 à 17, **caractérisé en ce qu'**après l'évaporation, le précondensat de résine de mélamine concentré obtenu présente une concentration de 95 à 99 % en poids.

19. Procédé selon au moins l'une quelconque des revendications 14 à 18, **caractérisé en ce que** l'évaporation des composants de faible poids moléculaire a lieu en deux étapes.

20. Procédé selon au moins l'une quelconque des revendications 14 à 18, **caractérisé en ce que** le malaxeur (30) est une extrudeuse au moins partiellement autonettoyante, fonctionnant en continu avec un dégazage sous vide.

21. Procédé selon au moins l'une quelconque des revendications 14 à 18, **caractérisé en ce que** l'on utilise, en tant que malaxeur (30), une extrudeuse bivis ayant des zones de dégazage.

22. Procédé selon au moins l'une quelconque des revendications 14 à 19, **caractérisé en ce que** dans le malaxeur en continu (30), jusqu'à 75 % en masse de matériaux de remplissage et/ou de fibres de renforcement, d'autres polymères réactifs du type copolymères d'éthylène, copolymères d'anhydride maléique, copolymères d'anhydride maléique modifiés, de polyméthacrylate, de polyamide, de polyester et/ou de polyuréthane, ainsi que jusqu'à 2 % en masse, à chaque fois rapporté aux condensats de résine de mélamine éthérés, de stabilisateurs, d'agents absorbant les UV et/ou d'adjuvants sont introduits de manière additionnelle.

23. Procédé selon au moins l'une quelconque des revendications 14 à 22, **caractérisé en ce que** le condensat de résine de mélamine est récupéré et granulé après une troisième étape de réaction (300).
